# EUROPÄISCHE PATENTANMELDUNG

(11) **EP 0 731 570 A2**
(43) Veröffentlichungstag der Anmeldung: **11.09.1996**
(21) Anmeldenummer: 96101549.2
(22) Anmeldetag: 03.02.1996
(51) Int. Cl.: H04B 3/54

(54) **Zweiwegkommunikationssystem für Energieversorgungsnetze**

(30) Priorität: 11.02.1995 DE 19504587
(71) Anmelder: ABB PATENT GmbH, D-68309 Mannheim (DE)
(72) Erfinder: Dobberstein, Joachim, D-68542 Heddesheim (DE); Eisenbeiss, Gerhard, D-67722 Winnweiler (DE); Miermann, Rainer, D-69493 Hirschberg (DE)
(74) Vertreter: Rupprecht, Klaus, Dipl.-Ing.

(57) **Zusammenfassung**

Die Erfindung bezieht sich auf ein hybrides Zweiwegkommunikationssystem für elektrische Energieversorgungsnetze. Das System vermeidet die Verwendung des Mittelspannungsnetzes zur Übertragung von Nachrichtensignalen, und somit alle damit verbundenen Übertragungsprobleme. Im System sind jeweils auf der Sekundärseite von Verteilnetztransformatoren (T_{B}) intelligente Knotencontroller (INC) angekoppelt. Die Datenübertragung zwischen einer Zentrale (Z) und den Knotencontrollern (INC) erfolgt über ein Weitverkehrsnetz (W). Die Datenkommunikation zwischen den Knotencontrollern und Einrichtungen der Endverbraucher (V) erfolgt über ein lokales Netzwerk (LAN) unter Verwendung des Niederspannungsnetzes (N) als Übertragungsmedium.

## Beschreibung

Die Erfindung bezieht sich auf ein System zur Zweiwegkommunikation in elektrischen Energieversorgungssystemen nach dem Oberbegriff des Anspruchs 1.

In elektrischen Energieversorgungssystemen sind seit Jahrzehnten Rundsteueranlagen im Einsatz. Dabei handelt es sich um Einwegkommunikationssysteme zum Zweck der Tarif- und Laststeuerung von Einrichtungen bei Endverbrauchern.

Als Weiterentwicklung zu einem Zweiwegkommunikationssystem sind in den 70-er und 80-er Jahren insbesondere in den USA Power-Line-Carrier-Verfahren und auch in Europa entsprechende Trägerfrequenz-Kommunikationssysteme konzipiert und erprobt worden. Mit der Zweiwegkommunikation soll zusätzlich zur Steuerrichtung auch ein Rückweg vom Verbraucher zu Leitsystemen geschaffen werden, der beispielsweise zur Zählerfernablesung, aber auch zur sonstigen Übertragung von Meldungen oder Meßwerten genutzt werden kann. Es wird dadurch möglich, Schaltvorgänge zu quittieren, wie auch sonst in der Fernwirktechnik üblich. Schaltzustände von Objekten beim Endkunden können abgefragt werden, wie z. B. Relais zur Tarifsteuerung, Speicherheizungssteuerung oder Klimanlagen. Durch die Abfrage von Schaltzuständen kann ein Defekt in den Einrichtungen des Endkunden unabhängig von einer Meldung des Kunden an das Energieversorgungsunternehmen zu einem frühen Zeitpunkt erkannt und entsprechend reagiert werden.

Ein solches Zweiwegkommunikationssystem, von dem die Erfindung ausgeht, ist beispielsweise das ROBCOM-System, das unter anderem in der Firmendruckschrift "ROBCOM Zweiweg-Kommunikation für elektrische Verteilnetze" Druckschrift 89-02D, herausgegeben von der ABB-Infocom AG, Turgi/Schweiz, beschrieben ist. Dieses System arbeitet in einem Trägerfrequenzband von 20 bis 95 kHz. Das System enthält Kopfstationen, die an das Mittelspannungsnetz angeschlossen sind, und die andererseits mit einer Leitzentrale verbunden sind. Netztransformatoren sind durch sogenannte Gateways überbrückt.

Die vorgenannten Trägerfrequenz-Kommunikationssysteme arbeiten weitgehend zufriedenstellend, es treten aber oftmals - abhängig von der jeweiligen Netzkonfiguration - Probleme auf. Die auftretenden Übertragungsprobleme haben Gründe, die prinzipieller Art sind. Diese sind bedingt durch die Verwendung - im Vergleich zur Rundsteuertechnik - relativ hoher Signalfrequenzen und großer Bandbreiten, um die in diesen Systemen großen Datenmengen mit hoher Geschwindigkeit übertragen zu können; das Mittel- und das Niederspanungsnetz sind jedoch nicht für eine Nachrichtenübertragung mit hohen Frequenzen konzipiert. Die langen Leitungswege zwischen den in der Mittelspannungsebene angeordneten Kopfstationen und den Endverbrauchereinrichtungen mit Überbrückung der dazwischen angeordneten Transformatoren bewirken eine hohe Dämpfung. Hinzu kommt die für Signalfrequenzen kurzschließende Wirkung von Kompensationskondensatoren und von Kabelnetzen. Weitere Probleme können durch den sogenannten Lambda-Viertel-Effekt leerlaufender oder schwach belasteter Leitungen auftreten, der sich ebenfalls kurzschließend auswirkt. Transformatoren können infolge parasitärer Wicklungskapazitäten in unerwünschter Weise als Bandpaß wirken, ebenso Kondensatoren in Verbindung mit Leitungsinduktivitäten.

Um solche Probleme zu lösen, ist es bei ausgeführten Anlagen oftmals notwendig, nachträglich und zusätzlich zu den Gateways zur Netztransformatorüberbrückung Repeater und Sperrdrosseln in der Mittelspannungsebene einzubauen. Da diese Einrichtungen für die Mittelspannung isoliert sein müssen, sind sie entsprechend aufwendig. Außerdem gelten solche Zusatzeinrichtungen als nachteilig für den Netzbetrieb.

Die Signalausbreitungsverhältnisse bei einer Übertragung über das Mittel- und Niederspannungsnetz lassen sich bei Frequenzen über 5 kHz nicht mit ausreichender Genauigkeit mit Hilfe von Netzmodellen berechnen. Im praktischen Betrieb auftretende Schwankungsbreiten des Signalpegels lassen sich trotz relativ großem Dynamikbereich der Empfänger nicht immer auffangen.

Der Erfindung liegt daher die Aufgabe zugrunde, ein Zweiwegkommunikationssystem für elektrische Energieversorgungsnetze anzugeben, das unter Vermeidung der aufgezeigten prinzipiellen Übertragungsprobleme eine sichere Datenkommunikation in einem großflächigen Netz ermöglicht.

Diese Aufgabe wird bei einem Zweiwegkommunikationssystem nach dem Oberbegriff des Anspruchs 1 durch dessen kennzeichnende Merkmale gelöst. Vorteilhafte Ausgestaltungen sind in weiteren Ansprüchen angegeben und der nachstehenden Beschreibung zu entnehmen.

Das erfindungsgemäße System hat eine Reihe von Vorteilen, die durch die drei wesentlichen Systemmerkmale bedingt sind: Endverbraucher-nahe Anordnung intelligenter Knotencontroller, Verwendung allein des Niederspannungsnetzes als Übertragungsmedium in einem lokalen Netzwerk und Verwendung eines WAN-Systems für die Kommunikation zwischen der Zentrale und den Knotencontrollern.

Da das Mittelspannungsnetz nicht zur Datenübertragung benutzt wird, sind alle damit möglicherweise verbundenen Probleme vermieden. Mit der Verbraucher-nahen Anordnung der Knotencontroller sind neue Systemfunktionen realisierbar, zumal die dort zu verarbeitenden Datenmengen wesentlich geringer sind, als im Fall einer Anordnung ähnlicher Zwischenstationen in einer höheren Spannungsebene.

Eine ausführlichere Beschreibung der Erfindung und von Ausgestaltungen, sowie deren Vorteile erfolgt nachstehend anhand der Zeichnungsfiguren.

Es zeigen:
- Fig. 1: Struktur eines erfindungsgemäßen Kommunikationssystems,
- Fig. 2: Struktur eines Kommunikationsssytems nach dem Stand der Technik.

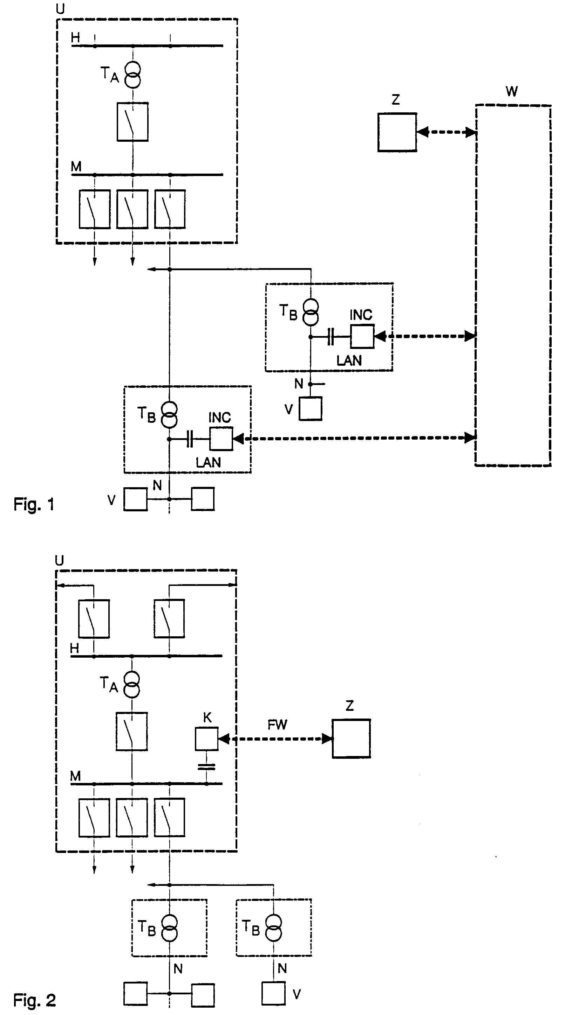

Fig. 2 zeigt die eingangs beschriebene Struktur bekannter Trägerfrequenz-Zweiwegkommunikationsssysteme mit Kopfstationen K, die typisch jeweils einer Hoch(H)-/Mittelspannungs(M)-Umspannstation U (mit Transformator T_{A}) zugeordnet sind. Die Kopfstationen K stehen mit einer Zentrale Z über Fernwirklinien FW in Verbindung. Die Einrichtungen der Endverbraucher V stehen mit den Kopfstationen K über ein Trägerfrequenz-Zweiweg-Kommunikationssystem in Verbindung, wobei als Übertragungsmedium das Niederspannungsnetz N und außerdem auch das Mittelspannungsnetz M dienen, die über Verteilnetzformatoren T_{B} gekoppelt sind. Die Anzahl der mit einer Kopfstation K in Verbindung stehenden Endverbraucher V ist sehr groß; dadurch dauern Abfragezyklen relativ lange.

Fig. 1 zeigt die Struktur eines erfindungsgemäßen Systems. An jedes Niederspannungsnetz N, vorzugsweise jeweils am Ort eines Verteilnetztransformators T_{B} ist auf bekannte Art (induktiv oder kapazitiv) ein intelligenter Knotencontroller INC angekoppelt. Da es in einem Energieversorungsnetz wesentlich mehr Niederspannungsnetze N als Unterstationen U gibt, ist die Anzahl der Verbraucher-nahe angeordneten Knotencontroller INC wesentlich größer als die Anzahl der Stationen K bekannter Systeme.

Die Knotencontroller INC weisen ein WAN-Modem zur Kommunikation mit der Zentrale Z über ein in Fig. 1 mit W bezeichnetes WAN (Wide Area Network), ein Standard-Datenkommunikationsnetz, auf. Dieses WAN kann vorzugsweise ein Datenfunknetz, aber auch ein anderes Weitverkehrsnetz, z. B. ein Lichtleiternetz sein.

Die Knotencontroller INC weisen außerdem ein LAN (Local Area Network)-Modem auf zur Kommunikation über das Niederspannungsnetz N mit Sendeempfangseinrichtungen der Endverbraucher V. Die leitungsgebundene Datenübertragung über das Niederspannungsnetz N kann vorteilhaft auf der Basis eines lokalen Netzwerks unter Einsatz bandspreizender Modulationsverfahren, beispielsweise Frequenzsprungverfahren erfolgen.

Das hybride Kommunikationssystem mit intelligenten Knotencontrollern ermöglicht neben den bereits erwähnten Funktionen der Lastführung und Zählerfernablesung auch neue Funktionen im Bereich der Netzführung und der Automatisierung im Niederspannungsnetz. Die Knotencontroller INC sind mit geeigneten Datenverarbeitungs- und Datenspeichereinrichtungen sowie entsprechenden Programmen dafür eingerichtet, autonom Abläufe innerhalb der Knotenbereiche, also einzelner Niederspannungsnetze durchzuführen. Programme die zeitgesteuert oder nach anderen Kriterien arbeiten, sind von der Zentrale aus fernladbar und/oder parametrierbar.

Die Knotencontroller können zyklische Abläufe steuern zur Statuserfassung und Registrierung, Meßwerterfassung, Fehlerstandserfassung sowie die Übertragung von Steuerbefehlen durchführen. Die Knotencontroller können eingerichtet sein für automatisches Abscannen und die Verwaltung der angeschlossenen Sendeempfangseinrichtungen, auch bei Änderung der Netztopologie, z. B. durch Kupplung von Niederspannungsnetzbereichen, einschließlich dynamischer Adressverwaltung. Solche Eigenschaften des Selbstkonfigurierens schließen auch die Möglichkeit ein, neue Teilnehmer zu ermitteln und in das System zu integrieren. Die Prozeßführung und das Abscannen beziehen sich dann jeweils nur auf die aktuell als zugehörig erkannten Teilnehmer.

Im hybriden Kommunikationssystem bestehen praktisch keine Begrenzungen bezüglich flächenmäßiger Ausdehnung, Datenmengen und Reaktionszeiten. Sowohl das Weitverkehrsnetz als auch die lokalen Netzwerke können für hohe Datentransferraten eingerichtet sein. Der entkoppelte und asynchrone Betrieb der einzelnen Kommunikationsnetzteile ermöglicht unter anderem auch einen gestuften Ausbau einzelner Netzteile von einem Einweg- zu einem Zweiwegkommunikationssystem. Die Montage des Systems, auch Erweiterungen sind kostengünstig durchführbar, da nur Arbeiten im Niederspannungsbereich notwendig sind.

Die Knotencontroller können dafür eingerichtet sein, Anweisungen der Zentrale vorrangig durchzuführen.

Soweit die Modems der Sendeempfangseinrichtungen der Endverbraucher eine Repeaterfunktion enthalten, kann diese genutzt werden, um eine Kommunikation zwischen Knotencontroller und Endverbrauchern über als Repeater wirkende Modemeinheiten durchzuführen. Der Auftrag zur Durchführung dieser Funktionen wird vom Knotencontroller an das jeweilige Transceiver-Modem erteilt. Um Kollisionsfreiheit herzustellen, müssen dann vom Controller entsprechende Maßnahmen eingeleitet werden, z. B. Unterbrechung einer zyklischen Abfrage, um einen Sendebetrieb des Repeaters zu ermöglichen.

Ein weiterer Vorteil des Systemkonzeptes besteht darin, daß ein Übersprechen zu benachbarten Kommunikationssystemen, z. B. eines anderen EVU sicher vermieden ist, da durch die Ankopplung auf der Sekundärseite von Verteilernetztransformatoren auf natürliche Weise hohe Signaldämpfungen auf dem Weg zu benachbarten Kommunikationssystemen über das Mittel- oder Hochspannungsnetz gegeben sind.

## Patentansprüche

1. Zweiwegkommunikationssystem zur Datenübertragung zwischen einer Zentrale in der Leitebene eines elektrischen Energieversorgungsnetzes und Endverbraucher-Einrichtungen, wobei Zweiwegkommunikationssysteme einer ersten Art eingesetzt sind zur Datenkommunikation zwischen der Zentrale und Unterstationen, sowie einer zweiten Art zur Datenkommunikation zwischen Zwischenstationen und Endverbrauchereinrichtungen, dadurch gekennzeichnet, daß das Kommunikationssystem als hybrides System ausgeführt ist, wobei
a) als Zwischenstationen intelligente Knotencontroller (INC) eingesetzt sind, die jeweils an ein Niederspannungsnetz (N) angekoppelt sind,
b) das Zweiwegkommunikationssystem der ersten Art (W) ein sogenanntes WAN (Wide-Area-Network), also ein System mit großflächiger Telekommunikationsstruktur ist, und
c) das Zweiwegkommunikationssystem der zweiten Art ein lokales Netzwerk (LAN) ist, das ausschließlich Niederspannungsnetze (N) als Übertragungsmedium verwendet.

2. Kommunikationssystem nach Anspruch 1, dadurch gekennzeichnet, daß das als Zweiwegkommunikation der ersten Art (W) verwendete WAN ein Datenfunknetz ist.

3. Kommunikationssystem nach Anspruch 1, dadurch gekennzeichnet, daß das Zweiwegkommunikationssystem der ersten Art (W) ein leitungsgebundenes Netzwerk, insbesondere ein Lichtleiternetz ist.

4. Kommunikationssystem nach einem der vorstehenden Ansprüche, dadurch gekennzeichnet, daß das Zweiwegkommunikationssystem der zweiten Art ein lokales Netzwerk LAN mit einer Übertragung in Bandspreiztechnik, beispielsweise nach einem Frequenzsprungverfahren, ist.

5. Kommunikationssystem nach einem der vorstehenden Ansprüche, dadurch gekennzeichnet, daß die intelligenten Knotencontroller (INC) räumlich jeweils einem Verteilnetztransformator (T_{B}) zugeordnet sind.

6. Kommunikationssystem nach einem der vorstehenden Ansprüche, dadurch gekennzeichnet, daß die Stromversorgungseinrichtung des intelligenten Knotencontrollers (INC) z. B. durch Batteriepufferung für einen Weiterbetrieb bei Ausfall der Netzstromversorung eingerichtet ist.

7. Kommunikationssystem nach einem der vorstehenden Ansprüche, dadurch gekennzeichnet, daß die Knotencontroller (INC) mit Standard-Modems als Schnittstelle zu den Kommunikationssystemen der ersten und zweiten Art ausgestattet sind.

8. Kommunikationssystem nach einem der vorstehenden Ansprüche, dadurch gekennzeichnet, daß den Sendempfangseinrichtungen der Endverbraucher (V) ein Modem mit Repeaterfunktion aufweisen und dadurch als Zwischenstation auf dem Übertragungweg zwischen einem Knotencontroller (INC) und Endverbraucher-Einrichtung (V) einsetzbar sind.

9. Kommunikationssystem nach einem der vorstehenden Ansprüche, dadurch gekennzeichnet, daß die intelligenten Knotencontroller (INC) der durch die Zentrale (Z) gebildeten zentralen Leitstellenebene als Subleitstellenebene unterlagert sind, und als dezentrale, asynchron arbeitende Einheiten eine autonome Prozeßführung durchführen, insbesondere die Endverbrauchereinrichtungen (V) und den Verteilnetztransformator (T_{B}) Zeit- und Ereignis-abhängig gesteuert abfragen und überwachen, sowie Zählerstände und Status erfassen.

10. Kommunikationssystem nach einem der vorstehenden Ansprüche, dadurch gekennzeichnet, daß die intelligenten Knotencontroller (INC) dafür eingerichtet sind, im Fall einer Unterbrechung des WAN-Betriebes oder einer temporären Übertragungsstörung den Betrieb mit den Endverbrauchereinrichtungen (V) aufrechtzuerhalten, indem durch eigene Zeitführung zeitabhängige Aktionen dezentral generiert werden, und gegebenenfalls mit Hilfe zusätzlicher Sensoren helligkeitsabhängige oder temperaturabhängige Steuerungen, wie z.B. Sperren oder Freigeben von Schaltprogrammen, veranlaßt werden.

11. Kommunikationssystem nach einem der vorstehenden Ansprüche, dadurch gekennzeichnet, daß die intelligenten Knotencontroller (INC) dafür eingerichtet sind, zusätzlich zur üblichen Fehlererkennung mit Hilfe geeigneter fehlerkorrigierender oder fehlererkennender Codes des lokalen Netzwerks (LAN) automatisch Mehrfachwiederholungen der Übertragung durchzuführen.

12. Kommunikationssystem nach einem der vorstehenden Ansprüche, dadurch gekennzeichnet, daß die intelligenten Knotencontroller (INC) dafür eingerichtet sind, in Verbindung mit den Sendeempfangseinrichtungen der Endverbraucher selbstkonfigurierend zu arbeiten, so daß beispielsweise im Fall eines erstmaligen Einsatzes eines Knotencontrollers (INC) oder bei hinzukommenden Endverbrauchereinrichtungen (V) selbsttätig Adressierung, Registrierung und Einbezug in Abfragezklyen erfolgen.
